# FASCICULE DE BREVET EUROPEEN

(11) **EP 2 483 741 B1**
(45) Date de publication et mention de la délivrance du brevet: **13.08.2014**
(21) Numéro de dépôt: 10770613.7
(22) Date de dépôt: 24.09.2010
(51) Int. Cl.: G02F 1/15, G02F 1/155

(54) **SYSTÈME ÉLECTROCHROME TRANSPARENT À PLUSIEURS PAIRES D'ÉLECTRODES D'ALIMENTATION**
TRANSPARENTES ELEKTROCHROMES SYSTEM MIT MEHREREN VERSORGUNGSELEKTRODENPAAREN
TRANSPARENT ELECTROCHROMIC SYSTEM WITH SEVERAL PAIRS OF SUPPLY ELECTRODES

(30) Priorité: 28.09.2009 FR 0956701
(43) Date de publication de la demande: 08.08.2012
(73) Titulaire: Essilor International (Compagnie Générale d'Optique), 94220 Charenton-le-Pont (FR)
(72) Inventeur: ARCHAMBEAU, Samuel, F-94220 Charenton-le-Pont (FR); BIVER, Claudine, F-94220 Charenton-le-Pont (FR); CANO, Jean-Paul, F-94220 Charenton-le-Pont (FR); DULUARD, Sandrine, F-94220 Charenton-le-Pont (FR)
(74) Mandataire: Cabinet Plasseraud
(86) Numéro de dépôt international: PCT/FR2010/052012
(87) Numéro de publication internationale: WO 2011/036419

(56) Documents cités:
- JP-A- 59 219 723
- JP-A- 2006 119 344
- US-A- 3 453 038
- US-A- 4 218 120
- US-A- 4 285 575
- US-A1- 2002 005 977

## Description

La présente invention concerne un système électrochrome transparent à plusieurs paires d'électrodes d'alimentation, ainsi qu'un dispositif électrochrome qui comprend un tel système.

De façon connue, un système électrochrome est un élément transparent dont les caractéristiques optiques de transmission lumineuse peuvent varier en réponse à un courant électrique qui est appliqué entre deux bornes d'alimentation du système. Pour cela, un système électrochrome comprend usuellement :
- deux parois externes qui définissent un volume fermé, le système étant transparent pour une direction de regard traversant les parois externes et le volume fermé entre deux côtés opposés ;
- un liquide ou gel qui est contenu dans le volume fermé ;
- des premières et secondes substances électroactives qui sont réparties dans le liquide ou gel, avec des potentiels respectifs d'oxydo-réduction qui sont différents, certaines au moins des premières et secondes substances électroactives ayant un effet optique variable entre une forme oxydée et une forme réduite de ces substances ; et
- une paire d'électrodes d'alimentation transparentes, qui sont destinées à être reliées respectivement à deux bornes de sortie d'une source électrique variable pour alimenter le système en courant électrique, de façon à transférer des électrons vers ou à partir de certaines au moins des substances électroactives, d'une façon inverse entre les premières et secondes substances électroactives à un même instant d'un fonctionnement du système.

Un tel système est dévoilé notamment par le document US 4285575.

Dans le cadre de la présente invention, on entend par élément transparent un élément optique qui permet à un utilisateur qui est situé d'un côté de l'élément de voir distinctement, à travers cet élément, des objets qui sont situés d'un autre côté de et à distance de l'élément. Autrement dit, une image de l'objet est formée sur la rétine de l'utilisateur, par de la lumière qui se propage sur une première distance non-nulle entre l'objet et l'élément transparent, puis traverse l'élément transparent et se propage sur une seconde distance non-nulle entre l'élément transparent et un oeil de l'utilisateur. Pour cela, une diffusion et/ou une diffraction lumineuse(s) que provoquerait l'élément optique doit (doivent) être suffisamment faible(s), de sorte que l'image d'un point d'objet à travers l'élément transparent soit un point d'image et non une tache diffuse dans l'image qui est perçue par l'utilisateur.

Un tel système électrochrome est destiné à varier la valeur de la transmission lumineuse à travers ce système, entre un état clair pour lequel la transmission lumineuse possède une valeur qui est élevée, et un état foncé pour lequel elle possède une valeur qui est basse. Or, certaines applications requièrent que la transmission lumineuse de l'état clair soit très élevée, et aussi que la transmission lumineuse de l'état foncé soit très basse. Autrement dit, des systèmes électrochromes sont recherchés, qui possèdent chacun une dynamique de commutation importante. Une telle dynamique de commutation importante est particulièrement utile lorsque le système électrochrome est destiné à être utilisé alternativement à l'extérieur et à l'intérieur d'un bâtiment. En effet, la luminosité ambiante peut être très élevée à l'extérieur en conditions ensoleillées, alors que la luminosité à l'intérieur du bâtiment reste moyenne ou faible.

Un des buts de l'invention consiste alors à proposer un dispositif électrochrome qui permette d'augmenter la dynamique de commutation.

Un autre but de l'invention consiste à proposer un dispositif électrochrome qui soit simple à fabriquer.

Encore un autre but de l'invention consiste à proposer un dispositif qui présente une vitesse de commutation élevée, entre des valeurs différentes de transmission lumineuse.

Pour atteindre ces buts et d'autres, la présente invention propose un dispositif électrochrome selon la revendication 1 comprenant notamment un système électrochrome transparent, qui permet une vision distincte à travers le système, et qui comprend au moins deux paires d'électrodes d'alimentation transparentes. Les électrodes d'alimentation d'une première paire sont portées ensemble par une même des deux parois externes. En outre, elles sont reliées respectivement à deux bornes de sortie d'une première source électrique variable, pour alimenter le système en courant électrique, de façon à transférer des électrons vers ou à partir de certaines au moins des substances électroactives, d'une façon inverse entre les premières et secondes substances électroactives à un même instant d'un fonctionnement du système. Autrement dit, les deux électrodes de la première paire sont isolées l'une par rapport à l'autre à l'intérieur du système électrochrome, tout en étant situées d'un même côté du volume qui contient les substances électroactives.

Parallèlement, les électrodes d'alimentation transparentes d'une seconde paire, qui sont distinctes de celles de la première paire, sont portées ensemble par l'autre des deux parois externes que celle qui porte les électrodes de la première paire. En outre, pour leur fonction d'alimentation du système en courant électrique, les électrodes d'alimentation de la seconde paire sont reliées respectivement à deux bornes de sortie d'une seconde source électrique variable, pour alimenter le système en courant électrique d'une façon supplémentaire par rapport à la première paire d'électrodes, en transférant de même des électrons vers ou à partir de certaines au moins des substances électroactives, d'une façon inverse entre les premières et secondes substances électroactives à un même instant du fonctionnement du système.

Les deux électrodes de la seconde paire sont donc aussi isolées l'une par rapport à l'autre à l'intérieur du système électrochrome, tout en étant situées ensemble de l'autre côté du volume qui contient les substances électroactives par rapport aux électrodes de la première paire. En outre, chaque électrode de l'une des paires est isolée à l'intérieur du système par rapport à chaque électrode de l'autre paire, pour permettre d'alimenter électriquement le système électrochrome indépendamment et simultanément par chaque paire d'électrodes. Autrement dit, chaque paire d'électrodes avec la source électrique à laquelle elle est reliée, réalise une alimentation du système électrochrome qui est autonome et séparée de l'autre paire d'électrodes avec l'autre source électrique.

Les deux paires distinctes d'électrodes d'alimentation constituent donc deux circuits parallèles, pour amener le courant électrique au système électrochrome. D'une façon générale, les deux sources électriques qui alimentent le système électrochrome en courant, respectivement par la première paire d'électrodes et par la seconde paire d'électrodes, peuvent être indépendantes. Ainsi, un courant électrique total qui est supérieur peut être délivré au système électrochrome, si bien que ce système présente une vitesse de commutation qui est accrue entre des valeurs différentes de transmission lumineuse.

En outre, étant donné que les électrodes d'une même paire sont situées d'un côté du volume qui contient les substances électroactives, qui est opposé par rapport aux électrodes de l'autre paire, des espèces électroactives peuvent être converties entre leurs formes oxydées et réduites, simultanément sur les deux côtés de ce volume. Lorsque les substances électroactives sont ainsi converties simultanément sur chaque côté du volume fermé, dans le même sens des réactions d'oxydo-réduction, leurs effets sur la transmission lumineuse du système se combinent si bien que le système électrochrome possède une dynamique de commutation qui est supérieure.

Par ailleurs, étant donné que toutes les électrodes sont portées par les parois externes du système, celui-ci est simple à fabriquer. En effet, chaque électrode peut être réalisée sous la forme d'une couche mince qui est déposée sur la paroi externe correspondante, sans que des éléments de support additionnels soient nécessaires à l'intérieur du système électrochrome. De plus, les deux paires d'électrodes peuvent avoir des motifs identiques chacune sur la paroi externe correspondante, de sorte qu'un même masque peut être utilisé pour les deux parois externes, pour définir ces motifs.

Dans divers modes de réalisation de dispositifs électrochromes selon l'invention, le volume fermé qui contient le liquide ou gel dans lequel sont réparties les substances électroactives, peut être divisé en cellules juxtaposées parallèlement aux parois externes. Dans ce cas, chaque cellule contient une portion du liquide ou gel, qui peut être en contact, à l'intérieur de cette cellule, avec une seule ou les deux électrodes de chaque paire.

Un dispositif électrochrome selon l'invention peut former une partie au moins de nombreux composants optiques, tels qu'un verre de lunettes, un verre de masque, une lentille optique, une visière de casque, un hublot d'avion, un vitrage, etc.

Enfin le dispositif électrochrome selon l'invention comprend aussi:
- la première source électrique variable, avec les deux bornes de sortie de cette première source électrique qui sont reliées respectivement aux électrodes d'alimentation de la première paire ; et
- la seconde source électrique variable, avec les deux bornes de sortie de cette seconde source électrique qui sont reliées respectivement aux électrodes d'alimentation de la seconde paire.

Chacune de la première et de la seconde source électrique variable est adaptée pour alimenter le système électrochrome en courant électrique en appliquant entre les électrodes de la paire correspondante une première ou une seconde tension électrique, respectivement, qui est supérieure à la différence entre les potentiels respectifs d'oxydo-réduction des premières et secondes substances électroactives.

Dans des modes de réalisation simplifiés de dispositifs selon l'invention, les première et deuxième sources électriques peuvent être confondues en une même source électrique commune aux deux paires d'électrodes d'alimentation, avec des connexions électriques qui relient l'une des bornes de sortie de cette source électrique commune à l'une des électrodes de la première paire et à l'une des électrodes de la seconde paire, et qui relient séparément l'autre borne de sortie de la source électrique commune à l'autre électrode de la première paire et à l'autre électrode de la seconde paire, selon un mode de connexion en parallèle.

D'autres particularités et avantages de la présente invention apparaîtront dans la description ci-après d'exemples de réalisation non limitatifs, en référence aux dessins annexés, dans lesquels :
- les figures 1 a et 1 b sont des vues en coupe de deux examples de systèmes électrochromes non conforme à l'invention
- les figures 2a et 2b représentent des dispositifs électrochromes selon l'invention comprenant un système conforme à la figure 1a, avec des modes différents de connexion électrique ;
- les figures 3a et 3b correspondent respectivement aux figures 2a et 2b, pour un dispositif electrohrome selon l'invention et comprenant un système conforme à la figure 1b ; et
- les figures 4a et 4b illustrent d'autres variantes de réalisation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

De plus, à titre d'illustration, les systèmes qui sont décrits maintenant sont destinés à former des verres de lunettes, mais il est entendu qu'ils peuvent former d'autres éléments transparents, notamment en adaptant convenablement les parois externes de ces systèmes.

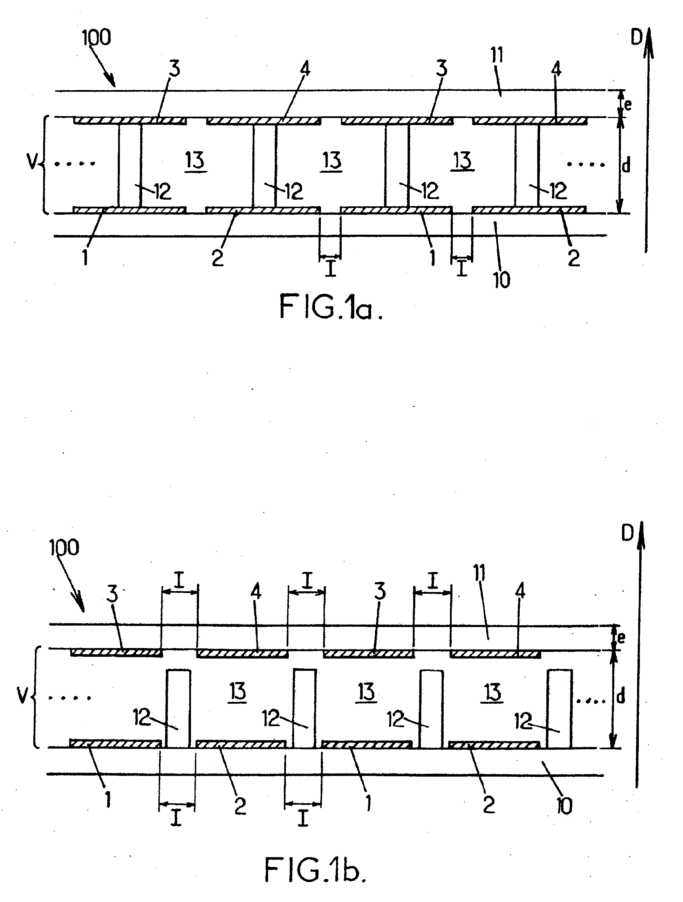

Conformément aux figures 1 a et 1b, un système électrochrome 100 comporte deux parois externes 10 et 11 qui sont parallèles, et qui délimitent un volume interne V. Le volume V est fermé de façon étanche, par exemple en utilisant un joint périphérique non représenté. Les parois externes 10 et 11 peuvent être un film souple, tel qu'un film de polyéthylène téréphtalate (PET), un film de polycarbonate (PC) ou un film de polyimide. Un tel film peut avoir une épaisseur e qui est comprise entre 30 et 200 µm (micromètre). La paroi externe 10 peut également être un verre de lunettes, en matériau minéral, organique ou hybride couramment utilisé dans le domaine ophtalmique.

Chacune des parois externes 10, 11 porte une paire d'électrodes sur sa face tournée vers le volume V : les électrodes 1 et 2, qui forment ensemble une première paire, sont portées par la paroi externe 10, et les électrodes 3 et 4, qui forment ensemble une seconde paire, sont portées par la paroi externe 11. Toutes les électrodes 1 à 4 sont isolées électriquement les unes des autres à l'intérieur du système 100, et sont en contact avec un liquide ou gel qui est contenu dans le volume V. Les électrodes 1 à 4 peuvent être en oxyde d'indium dopé à l'étain (ITO pour «indium-tin oxide» en anglais) ou en oxyde d'étain dopé au fluor (SnO₂:F). Elles peuvent être déposées sur les faces internes des parois 10 et 11 correspondantes sous forme de couches minces à motifs, avec une épaisseur de couche qui est comprise entre 0,1 µm et 3 µm, par exemple. Avantageusement, les électrodes de chaque paire sont situées une à une en vis-à-vis des électrodes de l'autre paire, de part et d'autre du volume V, selon une direction D qui est perpendiculaire aux parois externes 10 et 11. Ainsi, l'électrode 3 peut être en vis-à-vis de l'électrode 1, et l'électrode 4 en vis-à-vis de l'électrode 2. Sur chaque paroi externe 10 et 11, les électrodes de la paire qui est portée par cette paroi peuvent avoir des motifs respectifs complémentaires quelconques, tout en restant séparées l'une de l'autre par un intervalle I parallèlement à la paroi externe. Cet intervalle I peut assurer que les électrodes d'une même paire soient isolées électriquement entre elles. En particulier, les électrodes peuvent avoir des motifs en peigne, avec des dents de peigne qui sont imbriquées selon un pas d'alternance qui peut être compris entre 50 µm et 1,5 mm (millimètre), par exemple. L'intervalle I peut avoir une largeur de 18 µm, par exemple.

L'épaisseur d du volume V selon la direction D peut être de 20 µm, par exemple.

Les parois externes 10 et 11 ainsi que les électrodes 1 à 4 sont transparentes pour des rayons lumineux qui traversent le système 100 entre deux côtés opposés de celui-ci, notamment parallèlement à la direction D.

Le milieu fluide qui est enfermé dans le volume V est un liquide ou un gel, en fonction de sa composition. II contient les substances électroactives qui sont destinées à être oxydées ou réduites sur les électrodes d'alimentation 1 à 4 lors d'un fonctionnement du système 100. Il peut aussi contenir d'autres additifs tels qu'un solvant commun aux substances électroactives, des agents anti-UV, des fluidifiants, etc.

Les substances électroactives qui sont contenues dans le volume V peuvent être, à titre d'exemple illustratif :
- la N,N,N',N' tétraméthyl-phénylènediamine, qui possède une valeur d'environ 0,2 V (volt) de potentiel d'oxydo-réduction par rapport à une électrode de référence au calomel saturé. Elle est incolore dans sa forme réduite et bleue dans sa forme oxydée ; et
- le diperchlorate d'éthyl-viologène, ou diperchlorate de N,N' diéthyl-4,4' bipyridinium, qui possède une valeur d'environ -0,7 V du potentiel d'oxydo-réduction par rapport à l'électrode au calomel saturé. Il est incolore dans sa forme oxydée et bleu dans sa forme réduite.

Lorsque la tension est nulle entre les deux électrodes d'alimentation d'une même paire, la première de ces deux substances est dans sa forme réduite, et la seconde dans sa forme oxydée, à cause de leurs valeurs respectives du potentiel d'oxydo-réduction. Le système électrochrome est alors dans son état clair, avec une valeur élevée de la transmission lumineuse, par exemple supérieure à 70% et de préférence supérieure à 80%. Lorsque la tension qui est appliquée entre les deux électrodes d'alimentation d'une même paire est supérieure à 0,9 V environ, la N,N,N',N' tétraméthyl-phénylènediamine est oxydée au contact de celle de ces électrodes qui est reliée à la borne de sortie positive de la source électrique correspondante, et l'éthyl-viologène est réduit au contact de l'autre électrode qui est reliée à la borne de sortie négative de la même source. Le système électrochrome 100 devient alors absorbant avec une couleur bleue. Sa transmission lumineuse peut alors être inférieure à 7%, par exemple, lorsque les deux paires d'électrodes d'alimentation sont utilisées selon l'invention, voire inférieure à 2%, en fonction des concentrations des espèces électroactives notamment.

Ces deux substances électroactives peuvent être introduites dans le volume V avec chacune une concentration comprise entre 0,001 et 1 mol.l⁻¹ (mole par litre), en fonction du niveau d'absorption lumineuse qui est recherché pour l'état absorbant du système électrochrome 100. Par exemple, les concentrations des deux espèces électroactives citées ci-dessus peuvent être égales à 0,2 mol.l⁻¹.

Le système 100 peut comprendre en outre un réseau de parois internes 12, qui forme une partition du volume V en cellules 13 juxtaposées parallèlement aux parois externes 10 et 11. Les parois internes 12 sont perpendiculaires aux parois externes 10 et 11, et elles divisent le liquide ou gel qui est contenu dans le volume V en portions de liquide ou gel qui sont respectivement contenues dans les cellules 13. La composition et le mode de réalisation des parois 12 sont supposés connus de l'Homme du métier et ne sont pas répétés ici. Par exemple, les parois 12 peuvent avoir chacune une épaisseur qui est supérieure à 0,1 µm, de préférence comprise entre 0,5 et 8 µm, et chaque cellule 13 peut avoir une dimension qui est comprise entre 50 µm et 1,5 mm par exemple, parallèlement aux parois externes 10 et 11. Les cellules 13 forment alors un pavage du système électrochrome 100, parallèlement aux parois 10 et 11, dont le motif peut être quelconque, régulier, par exemple hexagonal, ou aléatoire ou pseudo-aléatoire.

Selon un premier mode de partition du volume V qui est illustré par la figure 1a, les deux électrodes de chaque paire sont chacune en contact avec le liquide ou gel qui contenu dans chaque cellule 13, et le liquide ou gel qui contenu dans chaque cellule contient à la fois les premières et les secondes substances électroactives. Ainsi, les deux électrodes 1 et 2 sont en contact avec les portions de liquide ou gel de toutes les cellules 13, de même que les deux électrodes 3 et 4. Selon une alternative avantageuse, certaines des parois internes 12 peuvent s'étendre entre les électrodes 1 et 3, et d'autres parois internes 12 entre les électrodes 2 et 4, avec des prolongements des électrodes de part et d'autre de chaque paroi interne 12 correspondante, parallèlement aux parois externes 10 et 11. Ainsi, chacune des électrodes 1 à 4 s'étend continûment entre des cellules 13 adjacentes, et chaque cellule 13 peut être alimentée par les quatre électrodes 1-4, par les prolongements respectifs de celles-ci à l'intérieur de cette cellule.

Selon un second mode de partition du volume V qui est illustré par la figure 1b, pour certaines au moins des cellules 13, une seule des deux électrodes 1 et 2 de la première paire, et une seule des deux électrodes 3 et 4 de la seconde paire, sont en contact avec le liquide ou gel qui est contenu dans chaque cellule. Dans ce cas, une première cellule 13 qui est alimentée par l'une des électrodes d'alimentation de chaque paire est adjacente avec une seconde cellule 13 qui est alimentée par l'autre électrode de chaque paire. Alternativement, certaines des parois internes 12 peuvent s'étendre entre les parois externes 10 et 11 au droit des intervalles de séparation inter-électrodes I sur ces deux parois externes.

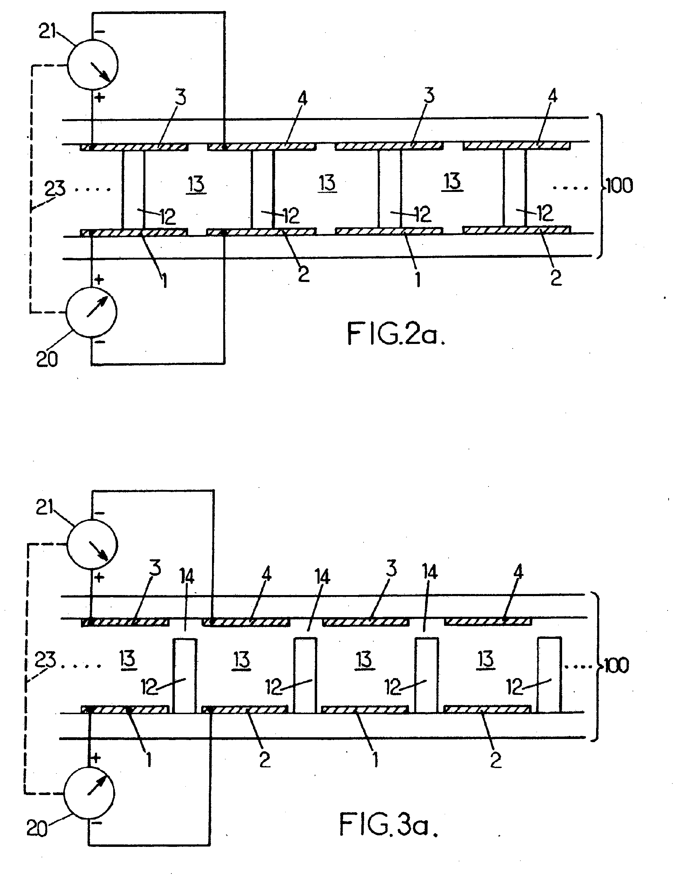

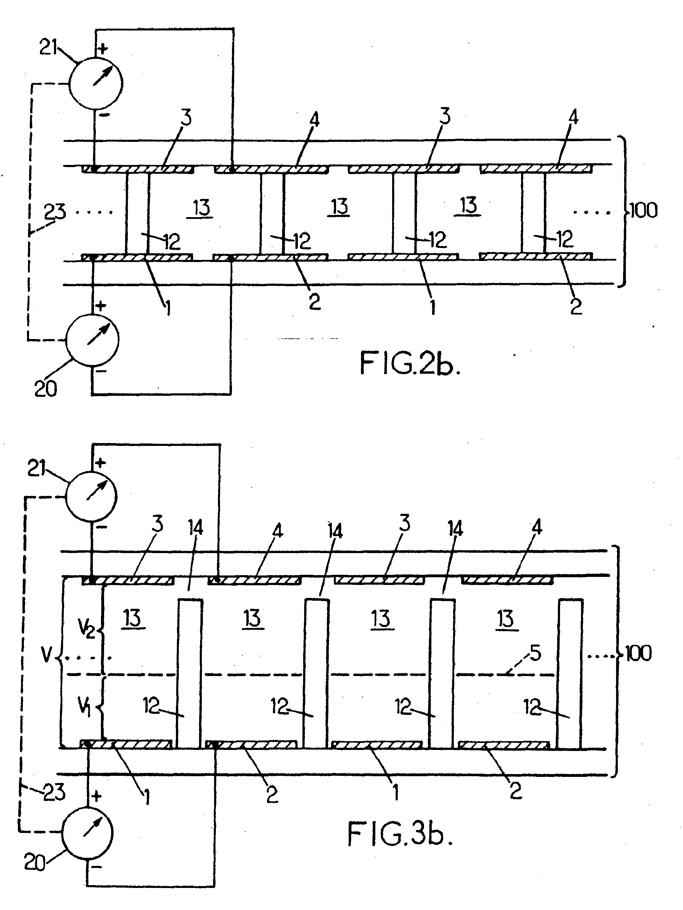

Conformément aux figures 2a, 2b, 3a et 3b, une première source électrique variable 20 est connectée électriquement, par deux bornes de sortie de courant de cette première source, aux électrodes 1 et 2 de la première paire d'électrodes. Simultanément, une seconde source électrique variable 21, différente de la source 20, est connectée électriquement, par deux bornes de sortie de courant de cette seconde source, aux électrodes 3 et 4 de la seconde paire d'électrodes. Chacune des sources 20 et 21 est adaptée pour produire entre ses bornes de sortie, une tension qui est supérieure ou égale à la différence entre les potentiels d'oxydo-réduction respectifs des premières et secondes substances. Ainsi, la source 20 et les électrodes 1 et 2 forment un premier ensemble d'alimentation électrique du système électrochrome 100. De même, la source 21 et les électrodes 3 et 4 forment un second ensemble d'alimentation électrique du même système électrochrome 100.

Les sources électriques 20 et 21 peuvent être adaptées pour alimenter simultanément le système 100 en courant électrique. En outre, leurs polarités par rapport aux électrodes d'alimentation du système 100 auxquelles elles sont reliées peuvent être inversées de façon synchronisée, pour produire des commutations du système 100 de l'état clair vers l'état foncé et vice-versa.

Les deux sources 20 et 21 peuvent être de type source de courant continu ou source impulsionnelle.

Facultativement, les deux sources 20 et 21 peuvent posséder chacune une borne de référence de potentiel électrique qui est distincte des bornes de sortie de courant de ces sources, avec une connexion électrique 23 qui relie entre elles ces bornes de référence de potentiel électrique.

Selon une première possibilité de connexion électrique des sources 20 et 21, lorsque les électrodes de chaque paire sont en vis-à-vis une à une, les sources électriques 20 et 21 peuvent être connectées aux électrodes des première et seconde paires, respectivement, de sorte que les sources électriques 20 et 21 aient des polarités respectives qui sont identiques par rapport aux électrodes qui sont situées en vis-à-vis, à certains instants au moins du fonctionnement du système. Les figures 2a et 3a illustrent cette première possibilité de connexion respectivement pour les structures du système 100 des figures 1 a et 1 b. Dans ce cas, des réactions d'oxydoréduction qui sont identiques sont provoquées simultanément sur les électrodes qui sont situées en vis-à-vis. Par exemple, à un instant où les électrodes 1 et 3 sont connectées aux bornes de sortie positives des sources 20 et 21, respectivement, des molécules de tétraméthyl-phénylènediamine sont oxydées en même temps sur ces deux électrodes 1 et 3. Simultanément, des molécules de diperchlorate d'éthyl-viologène sont réduites à la fois sur l'électrode 2 et sur l'électrode 4. Pour cela, les deux sources 20 et 21 présentent en même temps des tensions de sortie qui sont supérieures à 0,9 V environ entre leurs bornes de sortie respectives. Un obscurcissement du système 100 est alors obtenu. Un éclaircissement du système 100 est obtenu à l'inverse, lorsque les sources 20 et 21 sont commutées de sorte que les électrodes 1 et 3 sont maintenant connectées aux bornes de sortie négatives de ces sources, et les électrodes 2 et 4 aux bornes de sortie positives. Lors de cet éclaircissement, des molécules de tétraméthyl-phénylènediamine sont réduites en même temps sur les deux électrodes 1 et 3, et des molécules de diperchlorate d'éthyl-viologène sont oxydées simultanément sur les deux électrodes 2 et 4.

Lorsque le système 100 possède une partition en cellules avec une seule électrode de chaque paire pour alimenter chaque cellule 13 (figure 3a), un pont ionique 14 peut être prévu dans le système 100 entre des cellules 13 qui sont voisines et alimentées respectivement par des électrodes différentes de chaque paire. Un tel pont ionique peut être réalisé de l'une des façons couramment utilisées en électrochimie. Par exemple, les ponts ioniques 14 peuvent être situés à des extrémités des parois internes 12, par exemple du côté de la paroi externe 11. Ils peuvent aussi être réalisés dans les parois internes 12, notamment lorsque celles-ci sont perméables à des ions de petites tailles qui sont contenus dans le liquide ou gel avec les substances électroactives. De tels ponts ioniques 14 assurent une neutralité électrique du contenu de chaque cellule 13 à chaque instant du fonctionnement du système 100. Ils permettent ainsi de maintenir le système 100 dans un état quelconque d'une façon stationnaire.

Lorsqu'une seule électrode de chaque paire alimente chaque cellule 13 du système 100, le liquide ou gel peut contenir des premières substances électroactives sans secondes substances électroactives à l'intérieur des cellules 13 qui sont alimentées par l'une des électrodes de chaque paire, et des secondes substances électroactives sans premières substances électroactives à l'intérieur des cellules 13 qui sont alimentées par l'autre électrode de chaque paire. Par exemple, pour le mode de partition du volume V et le mode de connexion électrique de la figure 3a, celles des cellules 13 qui sont alimentées par les électrodes 1 et 3 peuvent ne contenir que des molécules de tétraméthyl-phénylènediamine, et celles des cellules 13 qui sont alimentées par les électrodes 2 et 4 peuvent ne contenir que des molécules de diperchlorate d'éthyl-viologène. Dans ce cas, le système 100 est à l'état clair avant d'être commuté pour la première fois après sa fabrication, et cette première commutation est effectuée en reliant les électrodes 1 et 3 aux bornes de sortie positives des sources 20 et 21.

Selon une seconde possibilité de connexion électrique des sources 20 et 21, lorsque les électrodes de chaque paire sont en vis-à-vis une à une, les sources électriques 20 et 21 peuvent être connectées aux électrodes des première et seconde paires, respectivement, de sorte que les sources électriques 20 et 21 aient des polarités respectives qui sont inversées par rapport aux électrodes qui sont situées en vis-à-vis, à certains instants au moins du fonctionnement du système. Les figures 2b et 3b illustrent cette seconde possibilité de connexion respectivement pour les structures du système 100 des figures 1a et 1b. Dans ce cas, les premières et les secondes substances électroactives subissent simultanément des réactions d'oxydation et de réduction, respectivement sur les électrodes qui sont situées en vis-à-vis. Pour cela, le liquide ou gel qui est contenu dans chaque cellule 13 contient à la fois des premières et des secondes substances électroactives. Ainsi, un même rayon lumineux qui traverse le système 100 parallèlement à la direction D est sensible simultanément aux formes colorées des premières et secondes substances, ou simultanément à leurs formes non colorées. Par exemple, lorsque l'électrode 1 est reliée à la borne de sortie positive de la source 20, l'électrode 3 est reliée à la borne de sortie négative de la source 21. L'électrode 2 est alors reliée à la borne de sortie négative de la source 20 et l'électrode 4 à la borne de sortie positive de la source 21. Les molécules de tétraméthylphénylènediamine sont alors oxydées simultanément sur les électrodes 1 et 4, alors que les molécules de diperchlorate d'éthyl-viologène sont simultanément réduites sur les électrodes 2 et 3. Le système 100 apparaît alors foncé, avec une couleur uniforme si les intervalles de séparation I sont suffisamment étroits. A l'inverse, lorsque les polarités des deux sources 20 et 21 sont échangées, c'est-à-dire que les deux électrodes 1 et 4 sont reliées aux bornes de sortie négatives des sources correspondantes, et les électrodes 2 et 3 à leurs bornes de sortie positives, les molécules de tétraméthylphénylènediamine sont réduites de nouveau sur les électrodes 1 et 4, et les molécules de diperchlorate d'éthyl-viologène sont ré-oxdydées sur les électrodes 2 et 3. Le système 100 revient donc à l'état clair.

Pour cette seconde possibilité de connexion électrique des sources 20 et 21, chaque cellule 13 avec les électrodes qui l'alimentent en courant électrique constitue un système électrochrome élémentaire. Les parois internes 12 peuvent alors former une isolation électrique entre des cellules 13 qui sont voisines. Toutefois, dans ce cas et pour la partition de la figure 3b, il peut être préférable que les sources 20 et 21 soient ajustées pour délivrer au système 100 des courants électriques qui sont sensiblement égaux à chaque instant.

Les formes oxydées et réduites des substances électroactives qui sont produites sur des électrodes situées en vis-à-vis, avec des polarités opposées, peuvent se neutraliser réciproquement au voisinage du centre de chaque cellule 13, après avoir été formées sur ces électrodes et après avoir diffusé les unes vers les autres. Une telle neutralisation provoque une consommation de courant électrique plus importante. Simultanément, à cause de cette neutralisation, la transmission lumineuse du système 100 à l'état foncé peut atteindre une valeur de saturation supérieure à la valeur minimale de transmission lumineuse qui résulterait des concentrations des substances électroactives. Autrement dit, la neutralisation réciproque des substances électroactives peut réduire la dynamique du système 100.

Une première méthode pour éviter une telle neutralisation réciproque des substances électroactives consiste à augmenter l'épaisseur d du volume V selon la direction D. De cette façon, les formes oxydées et réduites des substances électroactives qui sont formées sur des électrodes en vis-à-vis doivent diffuser sur des longueurs supérieures avant de se neutraliser réciproquement.

Selon une seconde méthode pour éviter la neutralisation réciproque des substances électroactives, le système 100 peut comprendre en outre un film de séparation qui est disposé parallèlement aux parois externes 10 et 11, entre celles-ci, de façon à diviser le volume V en un premier sous-volume V₁ en contact avec les électrodes 1 et 2, et en un second sous-volume V₂ en contact avec les électrodes 3 et 4. Un tel film de séparation, qui est référencé 5, est étanche pour les premières et secondes substances électroactives. Bien que le film 5 ne soit représenté que sur la figure 3b, il peut être utilisé identiquement dans le dispositif de la figure 2b.

Pour le dispositif de la figure 3b particulièrement, le film 5 peut former un pont ionique entre les sous-volumes V₁ et V₂ à l'intérieur de chaque cellule 13. Par exemple, il peut être perméable à des ions de petites tailles qui sont contenus dans le liquide ou gel avec les substances électroactives. Il n'est alors plus nécessaire que les sources 20 et 21 soient ajustées pour délivrer au système 100 des courants électriques qui soient sensiblement égaux à chaque instant. Par exemple, le film 5 peut être en Nafion^{®}, avec une épaisseur de 50 µm environ selon la direction D. Ce matériau qui est désigné par Nafion^{®} est bien connu de l'Homme du métier. En particulier, il comprend notamment des chaînes d'alcane perfluorées sur lesquelles sont branchées des groupements d'acide sulfonique.

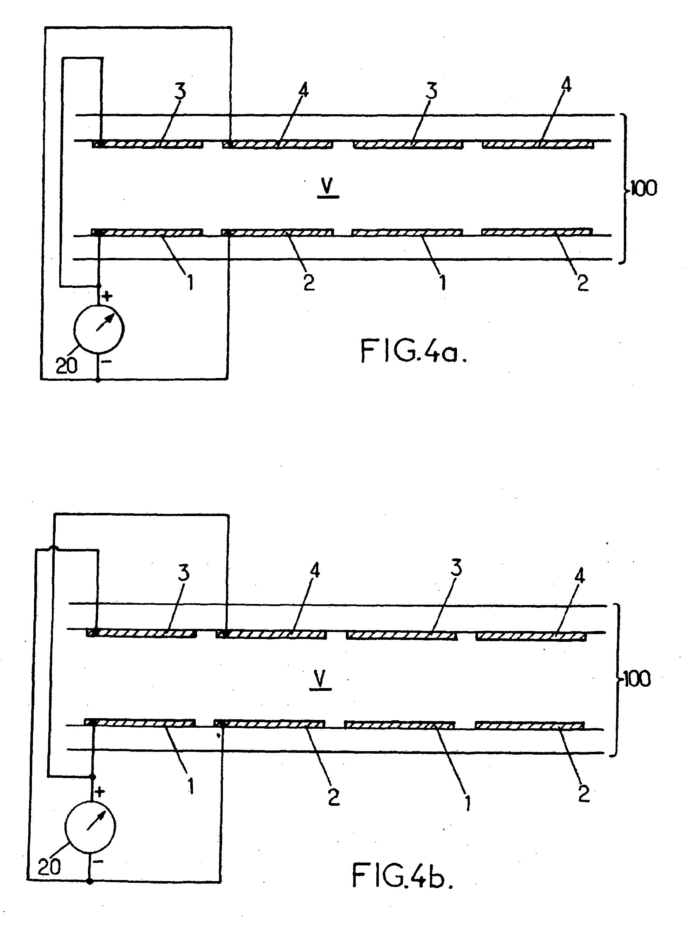

Les figures 4a et 4b illustrent d'autres mises en oeuvre de l'invention, avec une seule source électrique variable. Les parois internes 12 n'ont pas été représentées sur ces deux figures, étant donné qu'elles sont facultatives pour toute l'invention, en pouvant être conformes à la figure 1a ou à la figure 1b notamment. Les dispositifs des figures 4a et 4b se distinguent encore par la polarité des électrodes d'alimentation qui sont en vis-à-vis. Les électrodes 1 et 3 ont des polarités identiques dans le dispositif de la figure 4a, de même que les électrodes 2 et 4 avec la polarité opposée. Pour cela, les électrodes 1 et 3 sont connectées électriquement en parallèle à l'une des bornes de sortie de l'unique source 20, et les électrodes 2 et 4 sont connectées en parallèle à l'autre borne de sortie de la source 20. La polarité des électrodes 1 et 3 d'une part, avec celle des électrodes 2 et 4 d'autre part, est évidemment inversée selon que le système 100 est commuté vers l'état foncé ou vers l'état clair.

A l'inverse, les électrodes qui sont en vis-à-vis ont des polarités qui sont opposées dans le dispositif à source électrique unique de la figure 4b. Pour cela, les électrodes 1 et 4 sont connectées électriquement en parallèle à l'une des bornes de sortie de l'unique source 20, et les électrodes 2 et 3 sont connectées en parallèle à l'autre borne de sortie de la source 20.

Il est entendu que l'invention peut être reproduite en adaptant des caractéristiques qui ont été citées à titre d'exemple, tout en conservant certains au moins des avantages mentionnés. En particulier, l'Homme du métier comprendra que les électrodes des deux paires introduites par l'invention ne sont pas nécessairement en vis-à-vis, même si une telle configuration est préférée. En outre, les valeurs de concentrations et/ou les dimensions des éléments du système électrochrome peuvent être modifiées pour chaque application qui est considérée. Des substances ioniques supplémentaires peuvent aussi être ajoutées à la composition du liquide ou gel, notamment pour augmenter sa conduction ionique.

## Revendications

1. Dispositif électrochrome comprenant :
- un système électrochrome transparent (100) permettant une vision distincte à travers ledit système, et comprenant lui-même :
. deux parois (10, 11) définissant un volume fermé (V), le système étant transparent pour une direction de regard traversant les parois et ledit volume fermé entre deux côtés opposés ;
. un liquide ou gel contenu dans le volume fermé (V) ;
. des premières et secondes substances électroactives réparties dans le liquide ou gel, avec des potentiels respectifs d'oxydoréduction qui sont différents, certaines au moins des premières et secondes substances électroactives ayant un effet optique variable entre une forme oxydée et une forme réduite des dites substances ; et
. une première paire d'électrodes d'alimentation transparentes (1, 2), portées ensemble par une même (10) des deux parois;
- une première source électrique variable (20), avec les deux bornes de sortie de ladite première source électrique reliées respectivement aux électrodes d'alimentation de la première paire (1, 2), et adaptée pour alimenter le système en courant électrique en appliquant entre les dites électrodes de la première paire une première tension électrique supérieure à la différence entre les potentiels respectifs d'oxydo-réduction des premières et secondes substances électroactives de façon à transférer des électrons vers ou à partir de certaines au moins des substances électroactives, le transfert d'électrons s'effectuant d'une façon inverse entre les dites premières et secondes substances électroactives à un même instant d'un fonctionnement du système; et
**caractérisé en ce que** ledit système comprend en outre :
. une seconde paire d'électrodes d'alimentation transparentes (3, 4), distinctes des électrodes de la première paire (1, 2), les électrodes de la seconde paire étant portées ensemble par l'autre (11) des deux parois que celle (10) qui porte les électrodes de la première paire (1, 2),
et le dispositif comprend en outre :
- une seconde source électrique variable (21), avec les deux bornes de sortie de ladite seconde source électrique reliées respectivement aux électrodes d'alimentation de la seconde paire (3, 4), et adaptée pour alimenter de même le système en courant électrique en appliquant entre les dites électrodes de la seconde paire une seconde tension électrique aussi supérieure à ladite différence entre les potentiels respectifs d'oxydo-réduction des premières et secondes substances électroactives, de façon à alimenter le système en courant électrique d'une façon supplémentaire par rapport à la première paire d'électrodes en transférant de même des électrons vers ou à partir de certaines au moins des substances électroactives le transfert d'électrons s'effectuant d'une façon inverse entre les dites premières et secondes substances électroactives à un même instant d'un fonctionnement du système.

2. Dispositif selon la revendication 1, dans lequel les électrodes de chaque paire sont situées une à une en vis-à-vis des électrodes de l'autre paire, de part et d'autre du volume fermé (V) selon une direction (D) perpendiculaire aux parois (10, 11).

3. Dispositif selon la revendication 1 ou 2, formant une partie au moins d'un verre de lunettes, d'un verre de masque, d'une lentille optique, d'une visière de casque, d'un hublot d'avion ou d'un vitrage.

4. Dispositif selon l'une quelconque des revendications 1 à 3, comprenant en outre un réseau de parois internes (12) formant une partition du volume fermé (V) en cellules (13) juxtaposées parallèlement aux deux parois (10, 11) qui définissent ledit volume fermé, les dites parois internes étant perpendiculaires aux dites deux parois qui définissent le volume fermé, et dans lequel les deux électrodes de chaque paire (1-4) sont chacune en contact avec le liquide ou gel contenu dans chaque cellule, et le liquide ou gel contenu dans ladite cellule contenant à la fois les premières et secondes substances électroactives.

5. Dispositif selon l'une quelconque des revendications 1 à 3, comprenant en outre un réseau de parois internes (12) formant une partition du volume fermé (V) en cellules (13) juxtaposées parallèlement aux deux parois (10, 11) qui définissent le volume fermé, les dites parois internes étant perpendiculaires aux dites deux parois qui définissent le volume fermé, et dans lequel, pour certaines au moins des cellules, une seule des deux électrodes de la première paire (1, 2) et une seule des deux électrodes de la seconde paire sont en contact avec le liquide ou gel contenu dans chaque cellule, une première des dites cellules qui est alimentée par l'une des électrodes d'alimentation de chaque paire étant adjacente avec une seconde des dites cellules qui est alimentée par l'autre électrode de chaque paire.

6. Dispositif selon la revendication 5, dans lequel le liquide ou gel contient des premières substances électroactives sans secondes substances électroactives à l'intérieur des cellules (13) alimentées par l'une des électrodes de chaque paire (1, 3), et des secondes substances électroactives sans premières substances électroactives à l'intérieur des cellules (13) alimentées par l'autre électrode de chaque paire (2, 4).

7. Dispositif électrochrome selon l'une quelconque des revendications précédentes, dans lequel les première (20) et seconde (21) sources électriques sont adaptées pour alimenter simultanément le système électrochrome (100) en courant électrique.

8. Dispositif selon l'une quelconque des revendications 1 à 7, dans lequel les première (20) et deuxième (21) sources électriques possèdent chacune une borne de référence de potentiel électrique distincte des bornes de sortie des dites sources électriques, les dites bornes de référence de potentiel électrique étant reliées électriquement entre elles.

9. Dispositif selon l'une quelconque des revendications 1 à 7, dans lequel les première (20) et deuxième (21) sources électriques sont confondues en une même source électrique commune à la première et à la seconde paire d'électrodes d'alimentation, avec des connexions électriques qui relient l'une des bornes de sortie de ladite source électrique commune à l'une des électrodes de la première paire et à l'une des électrodes de la seconde paire, et qui relient séparément l'autre borne de sortie de ladite source électrique commune à l'autre électrode de la première paire et à l'autre électrode de la seconde paire, selon un mode de connexion en parallèle.

10. Dispositif selon la revendication 2, dans lequel les première (20) et seconde (21) sources électriques sont connectées aux électrodes des première (1, 2) et seconde (3, 4) paires, respectivement, de sorte que les dites première (20) et seconde (21) sources électriques aient des polarités respectives qui sont identiques par rapport aux électrodes situées en vis-à-vis, à certains instants au moins du fonctionnement du système.

11. Dispositif selon la revendication 10 et la revendication 5 ou 6, avec un pont ionique (14) entre des cellules (13) voisines alimentées respectivement par des électrodes différentes de chaque paire d'électrodes.

12. Dispositif selon la revendication 10 et la revendication 6.

13. Dispositif selon la revendication 2, et dans lequel les première (20) et seconde (21) sources électriques sont connectées aux électrodes des première (1, 2) et seconde (3, 4) paires de sorte que les dites première (20) et seconde (21) sources électriques aient des polarités respectives qui sont inversées par rapport aux électrodes situées en vis-à-vis, à certains instants au moins du fonctionnement du système, et dans lequel le liquide ou gel contenu dans chaque cellule (13) contient à la fois des premières et des secondes substances électroactives.

14. Dispositif selon la revendication 13 et la revendication 4 ou 5, dans lequel les parois internes (12) forment une isolation électrique entre des cellules (13) voisines.

15. Dispositif selon la revendication 13 ou 14, dans lequel le système électrochrome (100) comprend en outre un film de séparation (5) disposé parallèlement aux deux parois (10, 11) qui définissent le volume fermé (V), et entre les dites deux parois de façon à diviser ledit volume fermé en un premier sous-volume (V₁) en contact avec les électrodes (1, 2) de la première paire, et un second sous-volume (V₂) en contact avec les électrodes (3, 4) de la seconde paire.

16. Dispositif selon la revendication 15, dans lequel le film de séparation (5) forme un pont ionique entre le premier (V₁) et le second (V₂) sous-volume.

## Patentansprüche

1. Elektrochrome Vorrichtung, die enthält:
- ein transparentes elektrochromes System (100), das eine klare Sicht durch das System erlaubt, und selbst enthält:
• zwei Wände (10, 11), die ein geschlossenes Volumen (V) definieren, wobei das System für eine Blickrichtung transparent ist, die die Wände und das geschlossene Volumen zwischen zwei gegenüberliegenden Seiten durchquert;
• eine Flüssigkeit oder ein Gel, die/das in dem geschlossenen Volumen (V) enthalten ist;
• in der Flüssigkeit oder dem Gel verteilte erste und zweite elektroaktive Substanzen mit unterschiedlichen Oxydoreduktionspotentialen, wobei mindestens bestimmte der ersten und zweiten elektroaktiven Substanzen eine zwischen einer oxidierten Form und einer reduzierten Form der Substanzen variable optische Wirkung haben; und
• ein erstes Paar von transparenten Versorgungselektroden (1, 2), die zusammen von der gleichen (10) der zwei Wände getragen werden;
- eine erste variable Stromquelle (20), wobei die zwei Ausgangsklemmen der ersten Stromquelle jeweils mit den Versorgungselektroden des ersten Paars (1, 2) verbunden sind, und die dazu geeignet ist, das System mit elektrischem Strom zu versorgen, indem sie zwischen den Elektroden des ersten Paars eine erste elektrische Spannung höher als die Differenz zwischen den jeweiligen Oxydoreduktionspotentialen der ersten und zweiten elektroaktiven Substanzen anlegt, um Elektronen zu oder ausgehend von zumindest bestimmten der elektroaktiven Substanzen zu transferieren, wobei der Elektronentransfer zu einem gleichen Betriebspunkt des Systems zwischen den ersten und zweiten elektroaktiven Substanzen invers erfolgt;
**dadurch gekennzeichnet, dass** das System außerdem enthält:
• ein zweites Paar von transparenten Versorgungselektroden (3, 4), die sich von den Elektroden des ersten Paars (1, 2) unterscheiden, wobei die Elektroden des zweiten Paars zusammen von der anderen (11) der zwei Wände als derjenigen (10) getragen werden, die die Elektroden des ersten Paars (1, 2) trägt,
und die Vorrichtung außerdem enthält:
- eine zweite variable Stromquelle (21), wobei die zwei Ausgangsklemmen der zweiten Stromquelle jeweils mit den Versorgungselektroden des zweiten Paars (3, 4) verbunden sind, und die dazu geeignet ist, ebenfalls das System mit elektrischem Strom zu versorgen, indem sie zwischen den Elektroden des zweiten Paars eine zweite elektrische Spannung anlegt, die auch höher ist als die Differenz zwischen den jeweiligen Oxydoreduktionspotentialen der ersten und zweiten elektroaktiven Substanzen, um das System zusätzlich bezüglich des ersten Paars von Elektroden mit elektrischem Strom zu versorgen, indem sie ebenfalls Elektronen zu oder ausgehend von zumindest bestimmten der elektroaktiven Substanzen transferiert, wobei der Elektronentransfer zu einem gleichen Betriebspunkt des Systems zwischen den ersten und zweiten elektroaktiven Substanzen invers erfolgt.

2. Vorrichtung nach Anspruch 1, wobei die Elektroden jedes Paars sich einzeln gegenüber den Elektroden des anderen Paars zu beiden Seiten des geschlossenen Volumens (V) gemäß einer Richtung (D) lotrecht zu den Wänden (10, 11) befinden.

3. Vorrichtung nach Anspruch 1 oder 2, die mindestens einen Teil eines Brillenglases, eines Maskenglases, einer optischen Linse, eines Helmvisiers, eines Flugzeugfensters oder einer Verglasung formt.

4. Vorrichtung nach einem der Ansprüche 1 bis 3, die außerdem ein Netz von Innenwänden (12) enthält, die eine Aufteilung des geschlossenen Volumens (V) in nebeneinander angeordnete Zellen (13) parallel zu den zwei das geschlossene Volumen definierenden Wänden (10, 11) formen, wobei die Innenwände lotrecht zu den zwei das geschlossene Volumen definierenden Wänden liegen, und wobei die zwei Elektroden jedes Paars (1-4) je mit der/dem in jeder Zelle enthaltenen Flüssigkeit oder Gel in Kontakt stehen, und die/das in der Zelle enthaltene Flüssigkeit oder Gel sowohl die ersten als auch die zweiten elektroaktiven Substanzen enthält.

5. Vorrichtung nach einem der Ansprüche 1 bis 3, die außerdem ein Netz von Innenwänden (12) enthält, die eine Aufteilung des geschlossenen Volumens (V) in nebeneinander angeordnete Zellen (13) parallel zu den zwei das geschlossene Volumen definierenden Wänden (10, 11) formen, wobei die Innenwände lotrecht zu den zwei das geschlossene Volumen definierenden Wänden liegen, und wobei zumindest für bestimmte der Zellen nur eine der zwei Elektroden des ersten Paars (1, 2) und nur eine der zwei Elektroden des zweiten Paars mit der/dem in jeder Zelle enthaltenen Flüssigkeit oder Gel in Kontakt stehen, wobei eine erste der Zellen, die von einer der Versorgungselektroden jedes Paars versorgt wird, einer zweiten der Zellen benachbart ist, die von der anderen Elektrode jedes Paars versorgt wird.

6. Vorrichtung nach Anspruch 5, wobei die Flüssigkeit oder das Gel erste elektroaktive Substanzen ohne zweite elektroaktive Substanzen im Inneren der Zellen (13) enthält, die von einer der Elektroden jedes Paars (1, 3) versorgt werden, und zweite elektroaktive Substanzen ohne erste elektroaktive Substanzen im Inneren der Zellen (13) enthält, die von der anderen Elektrode jedes Paars (2, 4) versorgt werden.

7. Vorrichtung nach einem der vorhergehenden Ansprüche, wobei die erste (20) und die zweite (21) Stromquelle geeignet sind, um gleichzeitig das elektrochrome System (100) mit elektrischem Strom zu versorgen.

8. Vorrichtung nach einem der Ansprüche 1 bis 7, wobei die erste (20) und die zweite (21) Stromquelle je eine Bezugsklemme elektrischen Potentials besitzen, die sich von den Ausgangsklemmen der Stromquellen unterscheidet, wobei die Bezugsklemmen elektrischen Potentials elektrisch miteinander verbunden sind.

9. Vorrichtung nach einem der Ansprüche 1 bis 7, wobei die erste (20) und die zweite (21) Stromquelle in einer gleichen Stromquelle zusammenfallen, die dem ersten und dem zweiten Paar von Versorgungselektroden gemeinsam ist, mit elektrischen Verbindungen, die eine der Ausgangsklemmen der gemeinsamen Stromquelle mit einer der Elektroden des ersten Paars und mit einer der Elektroden des zweiten Paars verbinden, und die getrennt die andere Ausgangsklemme der gemeinsamen Stromquelle mit der anderen Elektrode des ersten Paars und mit der anderen Elektrode des zweiten Paars gemäß einem Parallelschaltungsmodus verbinden.

10. Vorrichtung nach Anspruch 2, wobei die erste (20) und die zweite (21) Stromquelle mit den Elektroden des ersten (1, 2) bzw. zweiten (3, 4) Paars derart verbunden sind, dass die erste (20) und zweite (21) Stromquelle Polaritäten haben, die bezüglich der gegenüberliegend angeordneten Elektroden gleich sind, zumindest zu bestimmten Zeitpunkten des Betriebs des Systems.

11. Vorrichtung nach Anspruch 10 und Anspruch 5 oder 6, mit einer Ionenbrücke (14) zwischen benachbarten Zellen (13), die je von unterschiedlichen Elektroden jedes Elektrodenpaars versorgt werden.

12. Vorrichtung nach Anspruch 10 und Anspruch 6.

13. Vorrichtung nach Anspruch 2, und wobei die erste (20) und zweite (21) Stromquelle mit den Elektroden des ersten (1, 2) und zweiten (3, 4) Paars derart verbunden sind, dass die erste (20) bzw. zweite (21) Stromquelle Polaritäten haben, die bezüglich der gegenüber angeordneten Elektroden invertiert sind, zumindest zu bestimmten Zeitpunkten des Betriebs des Systems, und wobei die Flüssigkeit oder das Gel, die/das in jeder Zelle (13) enthalten ist, sowohl erste als auch zweite elektroaktive Substanzen enthält.

14. Vorrichtung nach Anspruch 13 und Anspruch 4 oder 5, wobei die Innenwände (12) eine elektrische Isolierung zwischen benachbarten Zellen (13) formen.

15. Vorrichtung nach Anspruch 13 oder 14, wobei das elektrochrome System (100) außerdem eine Trennfolie (5) enthält, die parallel zu den zwei das geschlossene Volumen (V) definierenden Wänden (10, 11) und zwischen den zwei Wänden angeordnet ist, um das geschlossene Volumen in ein erstes Teilvolumen (V₁) in Kontakt mit den Elektroden (1, 2) des ersten Paars und ein zweites Teilvolumen (V₂) in Kontakt mit den Elektroden (3, 4) des zweiten Paars aufzuteilen.

16. Vorrichtung nach Anspruch 15, wobei die Trennfolie (5) eine Ionenbrücke zwischen dem ersten (V₁) und dem zweiten (V₂) Teilvolumen formt.

## Claims

1. Electrochromic device comprising:
- a transparent electrochromic system (100) enabling distinct vision through said system, and itself comprising:
• two walls (10, 11) defining a closed volume (V), the system being transparent for a gaze direction passing through the walls and said closed volume, between two opposite sides;
• a liquid or gel contained in the closed volume (V) ;
• first and second electroactive substances distributed in the liquid or gel, having respective oxidation/reduction potentials that are different, certain at least of the first and second electroactive substances having an optical effect that changes between an oxidized form and a reduced form of said substances; and
• a first pair of transparent supply electrodes (1, 2) borne together by one and the same (10) of the two walls; and
- a first variable electrical power source (20), the two output terminals of said first electrical power source being connected to the supply electrodes (1, 2), respectively, of the first pair, and being capable of supplying the system with electrical current by applying, between said electrodes of the first pair, a first electrical voltage higher than the difference between the respective oxidation/reduction potentials of the first and second electroactive substances, so as to transfer electrons to or from certain at least of the electroactive substances, the transfer of electrons taking place inversely between said first and second electroactive substances at a given instant in an operation of the system, **characterized in that** said system furthermore comprises:
• a second pair of transparent supply electrodes (3, 4), separate from the electrodes (1, 2) of the first pair, the electrodes of the second pair being borne together by that wall (11) of the two walls other than the wall (10) that bears the electrodes (1, 2) of the first pair;
and the device furthermore comprises:
- a second variable electrical power source (21), the two output terminals of said second electrical power source being connected to the supply electrodes (3, 4), respectively, of the second pair, and likewise being capable of supplying the system with electrical current by applying, between said electrodes of the second pair, a second electrical voltage also higher than said difference between the respective oxidation/reduction potentials of the first and second electroactive substances, so as to supply the system with electrical current in a supplementary manner relative to the first pair of electrodes by likewise transferring electrons to or from certain at least of the electroactive substances, the transfer of electrons taking place inversely between said first and second electroactive substances at a given instant in an operation of the system.

2. Device according to Claim 1, in which the electrodes of each pair are located one to one facing the electrodes of the other pair, on either side of the closed volume (V) in a direction (D) perpendicular to the walls (10, 11).

3. Device according to Claim 1 or 2, forming a portion at least of a spectacles' glass, of a mask's glass, an optical lens, a visor of a helmet, an aeroplane porthole or a glazing unit.

4. Device according to any one of Claims 1 to 3, furthermore comprising a network of internal walls (12) partitioning the closed volume (V) into cells (13) that are juxtaposed parallelly with the two walls (10, 11) that define said closed volume, said internal walls lying perpendicular to said two walls that define the closed volume, and in which the two electrodes of each pair (1-4) each make contact with the liquid or gel contained in each cell, and the liquid or gel contained in said cell contains both the first and second electroactive substances.

5. Device according to any one of Claims 1 to 3, furthermore comprising a network of internal walls (12) partitioning the closed volume (V) into cells (13) that are juxtaposed parallelly with the two walls (10, 11) that define the closed volume, said internal walls lying perpendicular to said two walls that define the closed volume, and in which, for certain at least of the cells, a single of the two electrodes (1, 2) of the first pair and a single of the two electrodes of the second pair make contact with the liquid or gel contained in each cell, a first of said cells, which is supplied with power via one of the supply electrodes of each pair, being adjacent to a second of said cells, which is supplied with power by the other electrode of each pair.

6. Device according to Claim 5, in which the liquid or gel contains first electroactive substances without second electroactive substances inside cells (13) supplied with power via one of the electrodes of each pair (1, 3), and second electroactive substances without first electroactive substances inside cells (13) supplied with power via the other electrode of each pair (2, 4).

7. Electrochromic device according to any one of the preceding claims, in which the first electrical power source (20) and the second electrical power source (21) are capable of supplying electrical current to the electrochromic system (100) simultaneously.

8. Device according to any one of Claims 1 to 7, in which the first electrical power source (20) and the second electrical power source (21) each possess a reference electrical potential terminal separate from the output terminals of said electrical power sources, said reference electrical potential terminals being electrically connected together.

9. Device according to any one of Claims 1 to 7, in which the first electrical power source (20) and the second electrical power source (21) are merged into one and the same electrical power source common to the first and second pair of supply electrodes, with electrical connections that connect one of the output terminals of said common electrical power source to one of the electrodes of the first pair and to one of the electrodes of the second pair, and which separately connect the other output terminal of said common electrical power source to the other electrode of the first pair and to the other electrode of the second pair, according to a parallel connection arrangement.

10. Device according to Claim 2, in which the first electrical power source (20) and the second electrical power source (21) are connected to the electrodes (1, 2) and (3, 4) of the first and second pairs, respectively, so that said first electrical power source (20) and said second electrical power source (21) have respective polarities that are identical relative to the electrodes in *vis-à-vis,* ie. directly opposite, at least at certain instants in the operation of the system.

11. Device according to Claim 10 and Claim 5 or 6, having an ionic bridge (14) between neighbouring cells (13) respectively supplied with power via different electrodes of each pair of electrodes.

12. Device according to Claim 10 and Claim 6.

13. Device according to Claim 2, and in which the first electrical power source (20) and the second electrical power source (21) are connected to the electrodes (1, 2) and (3, 4) of the first and second pairs so that said first electrical power source (20) and second electrical power source (21) have respective polarities that are inverted relative to the electrodes located in *vis-à-vis,* ie. directly opposite, at least at certain instants in the operation of the system, and in which the liquid or gel contained in each cell (13) contains both first and second electroactive substances.

14. Device according to Claim 13 and Claim 4 or 5, in which the internal walls (12) provide electrical insulation between neighbouring cells (13).

15. Device according to Claim 13 or 14, in which the electrochromic system (100) furthermore comprises a separating film (5) placed parallelly to the two walls (10, 11) that define the closed volume (V), and between said two walls so as to divide said closed volume into a first sub-volume (V₁) making contact with the electrodes (1, 2) of the first pair, and a second sub-volume (V₂) making contact with the electrodes (3, 4) of the second pair.

16. Device according to Claim 15, in which the separating film (5) forms an ionic bridge between the first sub-volume (V₁) and the second sub-volume (V₂).
